# EUROPÄISCHE PATENTSCHRIFT

(11) **EP 3 015 717 B1**
(45) Veröffentlichungstag und Bekanntmachung des Hinweises auf die Patenterteilung: **26.02.2020**
(21) Anmeldenummer: 14191259.2
(22) Anmeldetag: 31.10.2014
(51) Int. Cl.: F15B 13/01, F16B 39/02

(54) **Gewindescheibe für ein Ventil**
Threaded washer for a valve
Plaque filetée pour une soupape

(43) Veröffentlichungstag der Anmeldung: 04.05.2016
(73) Patentinhaber: HAWE Hydraulik SE, 85609 Aschheim (DE)
(72) Erfinder: Nießlein, Dominic, 85646 Anzing (DE)
(74) Vertreter: Grosse Schumacher Knauer von Hirschhausen

(56) Entgegenhaltungen:
- EP-A1- 0 695 878
- WO-A2-2007/054353
- DE-A1- 2 559 029
- DE-U1-202009 004 753
- US-A- 3 055 345
- US-A1- 2014 255 123

## Beschreibung

Die vorliegende Erfindung betrifft eine Gewindescheibe, die als Widerlager für ein Vorspannelement eines Ventils eingesetzt wird, insbesondere eine Gewindescheibe als Widerlagerscheibe für eine Feder eines Lasthalteventils oder Schockventils. Die Erfindung betrifft weiter ein Ventil mit einer entsprechenden Gewindescheibe und ein Verfahren zum Einstellen und/oder Verändern eines gewünschten Maximaldrucks in einem entsprechenden Ventil.

Zur Untersuchung von Motoren, wie z.B. Hydraulikmotoren, werden im Allgemeinen Motorprüfstände verwendet, die eine Untersuchung des Motors unabhängig von seinem normalen Einsatzumfeld erlauben. Hierbei können Grundparameter, wie z.B. Drehzahl und Drehmoment, erfasst werden, aber auch weitere Messwerte, wie z.B. Verbrauch, Geräusch, Schwingung, Temperaturverhalten usw. Es ist dabei in Motorprüfständen häufig möglich einzelne Arbeitspunkte eines zu prüfenden Motors stationär einzustellen, wobei die zu messenden Parameter meist in einem Drehzahl/Drehmoment-Diagramm oder einem Druck/Massenstrom-Diagramm eingetragen werden. Für gewöhnlich kommen hierzu Lasthalteventile zum Einsatz, die hydraulisch entlastbar sind und Umgehungsrückschlagventile aufweisen.

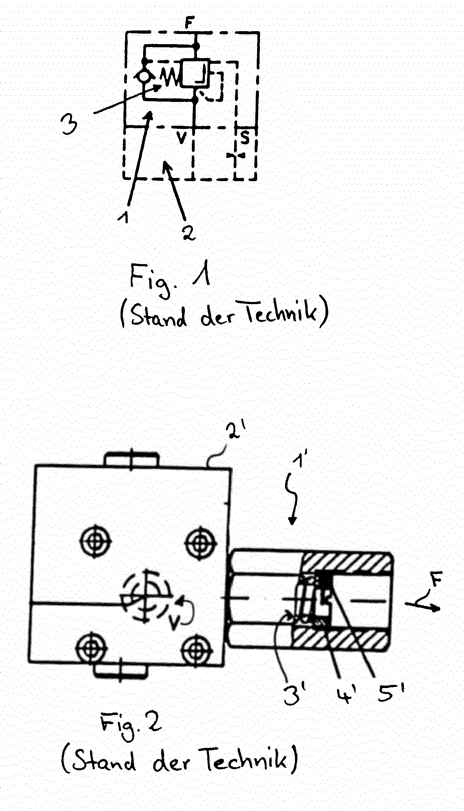

Das Schaltbild eines bekannten Einschraubventils in einem Prüfstand ist in Fig. 1 schematisch dargestellt. Dabei bezeichnet das Bezugszeichen 1 ein Einschraubventil, das auf einen Grundblock 2 aufgeschraubt ist. Die Hauptanschlüsse des Einschraubventils sind mit den Bezugszeichen V und F bezeichnet, wobei eine Arbeitsrichtung in einer Lasthaltefunktion von V zu F orientiert ist, während in der Richtung F nach V ein freier Durchfluss bereitgestellt wird. Für gewöhnlich erfolgt eine Einstellung des Einschraubventils auf einen gewünschten Druck in Arbeitsrichtung mittels einer Lochscheibe, die am Anschluss F angeordnet ist, und an der sich eine Feder 3 abstützt, wodurch eine bestimmte Vorspannung bereitstellt wird. Allgemein wird der Einstellwert für eine Vorspannung der Feder 3 als wenigstens 15% über dem maximal zu erwartenden Lastdruck, z.B. 30% über dem maximal zu erwartenden Lastdruck, als Betriebspunkt bzw. Ansprechbeginn des Einschraubventils gewählt.

Weiterhin ist in Fig. 2 teilweise eine schematische Schnittansicht eines bekannten Einschraubventils 1' gezeigt, das an einem Grundblock 2' angebracht ist und Hauptanschlüsse V und F aufweist. Hierbei stützt sich eine Feder 3', die in einem durch eine Hohlschraube bereitgestellten Federdom bereitgestellt ist, gegen eine Lochscheibe 5' ab, mittels deren Eindringtiefe in der Hohlschraube 6' eine bestimmte Vorspannung der Feder 3' eingestellt ist.

Die Lochscheibe 5' ist für gewöhnlich gegen unerwünschte Verstellung aufgrund von Erschütterungen und dergleichen durch eine Verstellsicherung gesichert. Die Verstellsicherung wird durch eine im Mantel der Lochscheibe 5' gebildete axiale Nut bereitgestellt, die mittels einer in eine Stirnfläche der Lochscheibe 5' eingeschraubte Madenschraube aufgespreizt wird. Durch die Spreizung der Lochscheibe 5' hebt sich das Gewinde der Lochscheibe 5' vom Innengewinde der Hohlschraube ab und es ergibt sich in der Hohlschraube 6' aufgrund der erhöhten Reibung zwischen den Gewinden der Lochscheibe 5' und der Hohlschraube 6' eine Lagefixierung der gespreizten Lochscheibe 5'. Dokument DE 2559029 A1 offenbart eine Gewindescheibe gemäß dem Oberbegriff des Anspruchs 1. Außerdem offenbart DE 2559029 A1 ein Ventil. Dokument US 3055345 A offenbart ein Ventil mit einer Gewindescheibe.

Bei herkömmlichen Ventilen ergeben sich nun die folgenden Nachteile: Zum Einen entstehen aufgrund von Verspannungen hervorgerufen durch die Spreizung der Lochscheibe Risse in den Stirnseiten der Lochscheibe, bevorzugt an Stegen, die zwischen einzelnen Durchlassöffnungen in der Lochscheibe ausgebildet sind. Zum Anderen ist die Verstellsicherung im Allgemeinen nicht mehr lösbar, so dass sich ein einfaches Nachstellen der Lochscheibe in der Hohlschraube, und insbesondere eine Änderung der eingestellten Vorspannung der Feder im Ventil, nicht mehr durchführen lässt.
Ausgehend von den vorangehend genannten Problemen und der vorangehend dargestellten Situation stellt sich die Aufgabe, eine Gewindescheibe für ein Ventil bereitzustellen, wobei die Gewindescheibe einen lösbaren Verstellmechanismus aufweist und schädliche Verspannungen in der Gewindescheibe hervorgerufen durch die Verstellsicherung möglichst unterdrückt werden. Ferner stellt sich die Aufgabe, ein Ventil und ein Verfahren zum Einstellen und/oder Ändern des Maximaldrucks eines Ventils bereitzustellen, wobei der Verstellmechanismus lösbar ist und schädliche Verspannungen im Ventil vermieden werden.

Die vorangehend genannte Aufgabe wird in einem Aspekt gelöst durch eine Gewindescheibe nach Anspruch 1.

Gemäß diesem Aspekt wird eine radiale Aufspreizung senkrecht zu den Stirnflächen erzeugt, wobei ein Abheben der Gewindegänge des Außengewindes der Gewindescheibe von einem Innengewinde, in das die Gewindeschraube in einem eingebauten Zustand eingeschraubt ist, vermieden wird und Verspannungen, die auf Stege zwischen den Durchlassöffnungen wirken und zu Rissen führen, unterdrückt werden.
In einer vorteilhaften Ausgestaltung dieses Aspekts wird die Mehrzahl von Gewindegängen von der Nut quer durchsetzt. Dadurch werden Verspannungen auf das Außengewinde entlang der Gewindegänge unterdrückt.
In einer weiteren vorteilhaften Ausgestaltung dieses Aspekts ist in der Öffnung ferner wenigstens eine Haltenase gebildet, die sich mit zunehmender Eindringtiefe des Spreizelements in die Öffnung zunehmend an einen sich verjüngenden Abschnitt des Spreizelements anlegt. Auf diese Weise wird eine gewünschte Aufspreizung gezielt eingestellt.
In einer weiteren vorteilhaften Ausgestaltung dieses Aspekts weist die Öffnung einen Gewindeabschnitt auf, in den das Spreizelement eingeschraubt ist. Dies stellt eine einfache Bereitstellung der Öffnung der Verstellsicherung bereit, wobei eine lösbare Spreizung durch Einschrauben des Spreizelements hervorgerufen wird und das Spreizelement zuverlässig zu einer Lagefixierung der Gewindescheibe beiträgt, ohne sich durch Erschütterungen zu lösen.
In einer vorteilhafteren Ausgestaltung hiervon ist das Spreizelement abschnittsweise als Madenschraube ausgebildet. Dies erlaubt ein bündiges Versenken des Spreizelements in der Öffnung.
In einer weiteren vorteilhaften Ausgestaltung dieses Aspekts durchsetzt die Nut die Öffnung entlang einer Radialrichtung der Gewindescheibe senkrecht zur Durchlassrichtung. Dies erlaubt eine effiziente Spreizung der Gewindescheibe durch das Spreizelement in der Öffnung.
In einer weiteren vorteilhaften Ausgestaltung dieses Aspekts liegt ein Verhältnis von einer Tiefe der Nut zu einem Durchmesser der Gewindescheibe senkrecht zur Durchlassrichtung in einem Bereich zwischen 0,5 und 1, 0, vorzugsweise zwischen 0,6 und 1,0 und weiter bevorzugt zwischen 0,7 und 1,0. Dadurch wird eine Spreizung der Gewindescheibe bei einer gleichzeitig vorteilhaften Unterdrückung von Materialverspannungen in der Gewindescheibe ermöglicht.

Erfindungsgemäss ist in der Gewindescheibe eine zentrale Durchlassöffnung vorgesehen, die die Gewindescheibe entlang der Durchlassrichtung zentral durchsetzt. Dies erlaubt die Bereitstellung einer größeren Durchlassöffnung, ohne die Stabilität der Gewindescheibe nachteilig zu beeinflussen.
Gemäß einer weiteren vorteilhafteren Ausgestaltung hierin weist die zentrale Durchlassöffnung eine sich von einer Stirnfläche der Gewindescheibe entlang der Durchlassrichtung abstehende manschettenartige Auskragung auf. Dadurch kann eine vorteilhafte Führung von einem die Gewindescheibe durchströmenden Fluid bereitgestellt werden.
In einem weiteren Aspekt der Erfindung wird ein Ventil mit einer Hülse und einem Vorspannelement bereitgestellt, das sich gegen eine in der Hülse angeordnete Widerlagerscheibe abstützt, wobei die Hülse ein Innengewinde aufweist und die Widerlagerscheibe durch die Gewindescheibe nach dem vorangehend erläuterten Aspekt bereitgestellt wird, die in die Hülse eingeschraubt ist. Folglich wird ein Ventil mit einer lösbar verstellsicherbaren Gewindescheibe bereitgestellt, in der nachteilige Verspannungen bei einer Spreizung der Gewindescheibe zur Verstellsicherung selbiger im Ventil unterdrückt werden.
In einer vorteilhaften Ausgestaltung dieses weiteren Aspekts ist die Widerlagerscheibe in der Hülse lösbar in seiner Lage fixiert. Dadurch lässt sich eine gewünschte Vorspannung des Vorspannelements auf einfache Weise einstellen und ändern.
In einer weiteren vorteilhaften Ausgestaltung dieses weiteren Aspekts ist das Ventil als Einschraubventil mit einem Sechskant-Federgehäuse zur Montage an einer Grundplatte ausgebildet. Dadurch wird ein einfach montierbares Ventil mit den Vorteilen der vorliegenden Erfindung bereitgestellt.
In einem weiteren Aspekt der Erfindung wird ein Verfahren zum Einstellen und/oder Verändern eines gewünschten Maximaldrucks in dem Ventil gemäß dem vorangehend erläuterten weiteren Aspekt der Erfindung bereitgestellt, wobei das Spreizelement als Madenschraube in der Öffnung vorgesehen ist. Hierbei umfasst das Verfahren ein Bereitstellen der Gewindescheibe als Widerlagerscheibe in der Hülse an einer vorbestimmten Eindringtiefe, ein Einstellen und/oder Ändern der Eindringtiefe der Gewindescheibe, um für das Vorspannelement eine vorbestimmte Vorspannung einzustellen und/oder zu ändern, und ein Fixieren der Gewindeschraube an der geänderten Eindringtiefe durch Spreizung der Gewindescheibe mittels eines vorbestimmten Anziehmoments zum Anziehen der Madenschraube in der Öffnung. Hierdurch wird ein vorteilhaftes Einstellen und/oder Ändern des Maximaldrucks im Ventil vorgesehen, wobei das Risiko einer Beschädigung der Gewindescheibe durch die Verstellsicherung bzw. wiederholtes Lösen und Anziehen der Verstellsicherung sehr gering ist.

In einer vorteilhaften Ausgestaltung dieses weiteren Aspekts umfasst das Verfahren vor dem Einstellen und/oder Ändern der Eindringtiefe der Gewindescheibe ferner ein Fixieren der Lage der Gewindescheibe an der vorbestimmten Eindringtiefe durch Spreizung der Gewindescheibe mittels des vorbestimmten Anziehmoments zum Anziehen der Madenschraube in der Öffnung, und ein Lösen der Madenschraube in der Öffnung, um die Spreizung der Gewindescheibe aufzuheben. Dies stellt eine vorteilhafte und einfache Weise zur Bereitstellung und Lösung der Gewindescheibe im Ventil dar.

In einer weiteren vorteilhaften Ausgestaltung dieses weiteren Aspekts liegt das Anziehmoment in einem Bereich von 0,3 Nm bis 0,5 Nm. Dies stellt vorteilhaft ein Anziehmoment dar, das eine effiziente Verstellsicherung der Gewindescheibe im Ventil ermöglicht.

Weitere Vorteile und vorteilhafte Ausgestaltung der vorliegenden Erfindung gehen aus der nachstehenden Beschreibung anhand der beiliegenden Figuren hervor, wobei:
- Fig. 1: schematisch eine Schaltbild eines bekannten Lasthalteventils darstellt;
- Fig. 2: schematisch ein bekanntes Lasthalteventil darstellt;
- Fig. 3a: schematisch eine perspektivische Ansicht einer Gewindescheibe gemäß einer beispielhaften Ausführungsform der Erfindung in einer ersten Ansicht darstellt;
- Fig. 3b: schematisch eine perspektivische Ansicht der Gewindescheibe aus Fig. 3b in einer zweiten Ansicht darstellt;
- Fig. 3c: schematisch eine Querschnittansicht der in den Fig. 3a und 3b dargestellten Gewindescheibe darstellt;
- Fig. 3d: schematisch eine Aufsicht auf die Gewindescheibe aus Fig. 3a darstellt;
- Fig. 3e: eine Querschnittansicht entlang des Schnitts A-A aus Fig. 3d darstellt; und
- Fig. 4: die Gewindescheibe aus den Fig. 3a bis 3e in einer Einbausituation in einem Ventil gemäß einigen beispielhaften Ausführungsformen der Erfindung darstellt.

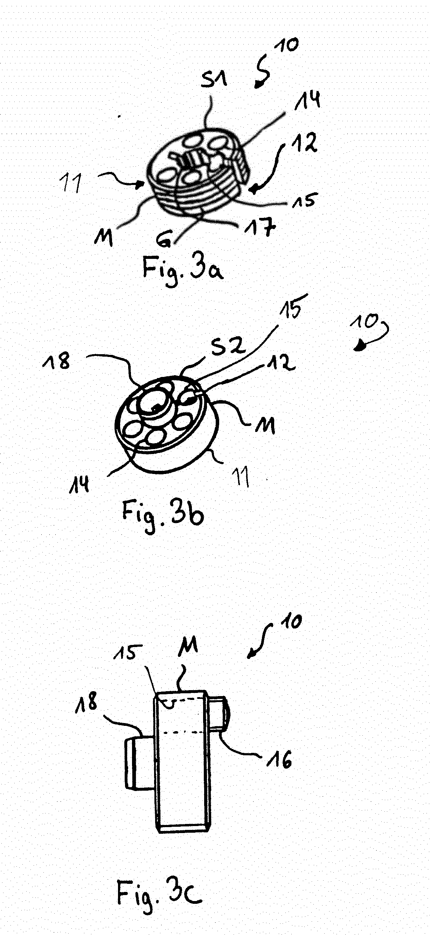

Fig. 3a stellt schematisch eine perspektivische Ansicht einer Gewindescheibe 10 dar, die als Widerlagerscheibe für ein Vorspannelement (nicht dargestellt) wie z.B. eine Feder, in einem Ventil (nicht dargestellt), wie z.B. ein Lasthalteventil oder Schockventil, eingesetzt werden kann. Die Gewindescheibe 10 weist einen zylindrischen Gewindekörper 11 auf, der von einer zylindrischen Gestalt mit kreisförmigen Stirnflächen, von denen in der perspektivischen Darstellung von Fig. 3a lediglich eine Stirnfläche S1 sichtbar ist, und einer Mantelfläche M ist. Der zylindrische Gewindekörper 11 ist vorzugsweise derart dimensioniert, dass ein Durchmesser der Stirnflächen, insbesondere der Stirnfläche S1, größer ist als eine Dicke des zylindrischen Gewindekörpers 11 entlang einer Dickenrichtung, die senkrecht zu den Stirnflächen, insbesondere der Stirnfläche S1, orientiert ist. In einigen beispielhaften Ausführungsformen kann der zylindrische Gewindekörper 11 derart dimensioniert sein, dass ein Aspektverhältnis aus dem Durchmesser der zylindrischen Gewindekörpers 11 zu der Dicke des zylindrischen Gewindekörpers 11 wenigstens 2,5 beträt.
Im zylindrischen Gewindekörper 11 der Gewindescheibe 10 ist ferner mindestens eine Durchlassöffnung 14 gebildet, die den zylindrischen Gewindekörper 11 entlang seiner Dickenrichtung vollständig durchsetzt und damit eine Durchlassrichtung senkrecht zu den Stirnflächen, insbesondere der Stirnfläche S1, festlegt. Gemäß einiger beispielhafter Ausführungsformen kann ein Aspektverhältnis aus dem Durchmesser des zylindrischen Gewindekörpers 11 senkrecht zur Durchlassrichtung zu einem Innendurchmesser von wenigstens einer Durchlassöffnung 14 größer sein als 2,0, wie z.B. 3,0 oder größer, 4,0 oder größer und dergleichen. Gemäß einiger beispielhafter Ausführungsformen kann die Anzahl der Durchlassöffnungen gleich eins, zwei, drei, vier, fünf, sechs usw. betragen.

Gemäß einer erfindungsgemässen Ausführungsform, die in Fig. 3a dargestellt ist, ist in dem zylindrischen Gewindekörper 11 ferner eine zentrale Durchlassöffnung 17 gebildet, die koaxial zu einer Symmetrieachse des zylindrischen Gewindekörpers 11 senkrecht zur Stirnfläche S1 ausgebildet ist. Die zentrale Durchlassöffnung 17 kann z.B. ein Innensechskantprofil als Mitnahmeprofil für die Gewindescheibe 10 aufweisen. Gemäß einiger spezieller Ausführungsformen kann lediglich ein Teil der zentralen Durchlassöffnung 17 mit einem Innensechskantprofil ausgestaltet sein. Alternativ sind von einem Innensechskantprofil abweichende Mitnahmeprofile denkbar, die in der Technik bekannt sind.

Zusätzlich zu der wenigstens einen Durchlassöffnung 14 und der zentralen Durchlassöffnung 17 ist eine weitere Öffnung 15 vorgesehen, die den zylindrischen Gewindekörper 11 entlang seiner Durchlassrichtung vollständig durchsetzt (vgl. Fig. 3b) und weiter unten detaillierter beschrieben ist.

Der zylindrische Gewindekörper 11 weist ein in seiner Mantelfläche M gebildetes Außengewinde G mit einer Mehrzahl von Gewindegängen auf (z.B. zwei, drei, vier oder mehr), die den Mantel M in Umfangsrichtung des zylindrischen Gewindekörpers 11 umgeben.

Im zylindrischen Gewindekörper 11 ist ferner eine Nut 12 gebildet, die im zylindrischen Gewindekörper 11 quer zu den Gewindegängen des Außengewindes G orientiert ist und den Gewindekörper 11 entlang der Durchlassrichtung völlig durchsetzt, während der zylindrische Gewindekörper 11 entlang einer Radialrichtung lediglich teilweise durchsetzt wird. Es wird angemerkt, dass die Nut 12 mit der Öffnung 15 in Verbindung steht und die Öffnung 15 zu der Mantelfläche M hin öffnet.

Gemäß einiger bevorzugter Ausführungsformen, die in den Figuren dargestellt sind, wird die Öffnung 15 durch die Nut 12 diametral durchsetzt, so dass sich die Nut 12 von der Mantelfläche M aus durch die Öffnung 15 radial in den zylindrischen Gewindekörper 11 hinein erstreckt. Alternativ kann die Öffnung 15 von der Nut 12 nicht diametral durchsetzt sein.

Gemäß einiger beispielhafter Ausführungsformen der Erfindung kann ein Verhältnis von einer Tiefe der Nut, d.h. eine radiale Erstreckung der Nut in den zylindrischen Gewindekörper 11 hinein, zu einem Durchmesser des zylindrischen Gewindekörpers 11 senkrecht zur Durchlassrichtung ungefähr 0,5 bis 1,0, vorzugsweise 0,6 bis 1,0 und weiter bevorzugt 0, 7 bis 1, 0 betragen. In einigen vorteilhaften Ausführungsformen, wie in den Figuren dargestellt ist, kann die Nut 12 senkrecht zu den Gewindegängen des Außengewindes G orientiert sein.

Fig. 3b stellt schematisch eine perspektivische Ansicht der Gewindescheibe 10 dar, in der nun eine zweite Stirnfläche S2 des zylindrischen Gewindekörpers 11 sichtbar ist, die der Stirnfläche S1 in Fig. 3a gegenüberliegend angeordnet ist. Von der Stirnfläche S2 des zylindrischen Gewindekörpers 11 steht entlang der Durchlassrichtung eine manschettenartige Auskragung 18 ab, die die zentrale Durchlassöffnung 17 in Fig. 3a entlang der Durchlassrichtung verlängert. Die manschettenartige Auskragung 18 steht vom zylindrischen Gewindekörper 11 entlang der Durchlassrichtung ab.

Fig. 3c stellt eine ebene Seitansicht der Gewindescheibe 10 dar. Darstellungsgemäß ist in der Öffnung 15 des zylindrischen Gewindekörpers 11 ein Spreizelement 16 angeordnet bzw. das Spreizelement 16 erstreckt sich wenigstens teilweise in die Öffnung 15 hinein. Das Spreizelement ist auf der Stirnseite S1 in die Öffnung 15 eingeführt, wohingegen sich die manschettenartige Auskragung 18 von der gegenüberliegenden Stirnseite S2 des zylindrischen Gewindekörpers 11 wegerstreckt.

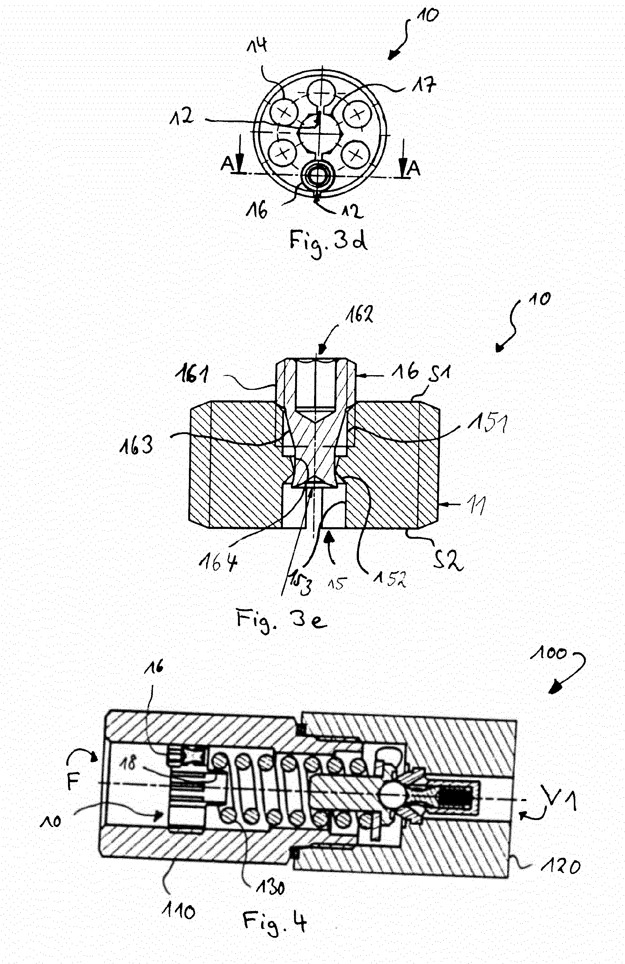

Fig. 3d stellt eine ebene Aufsichtsansicht der Gewindescheibe 10 aus Fig. 3c dar, wobei das Spreizelement 16 in der Öffnung 15 angeordnet ist. Entsprechend der Darstellung in Fig. 3d weist die zentrale Durchlassöffnung 17 ferner ein Innensechskantprofil auf, wie im Zusammenhang mit Fig. 3a oben erläutert wurde. Das Innensechskantprofil der zentralen Durchlassöffnung 17 kann gemäß einigen beispielhaften Ausführungsformen lediglich im zylindrischen Gewindekörper 11 gebildet sein, wohingegen die manschettenartige Auskragung kein Innensechskantprofil aufweist.

Im Folgenden werden das Spreizelement 16 und die Öffnung 15 gemäß einiger beispielhafter Ausführungsformen der Erfindung anhand von Fig. 3e beschrieben. Hierbei ist ein Schnitt durch das Profil der Öffnung 15 im zylindrischen Gewindekörper 11 der Gewindescheibe 10 und durch das Spreizelement 16 entlang der Linie A-A in Fig. 3d dargestellt. Die Öffnung 15 weist einen Gewindeabschnitt 151 auf, an den sich entlang der Durchlassrichtung in der Öffnung 15 ein Nasenabschnitt 152 anschließt, so dass sich der Durchmesser der Öffnung entlang der Durchlassrichtung im Nasenabschnitt 152 verkleinert oder verjüngt. Insbesondere ist ein Innendurchmesser der Öffnung 15 im Nasenabschnitt 152 im Vergleich zum Innendurchmesser der Öffnung 15 im Gewindeabschnitt 151 kleiner.

An den Nasenabschnitt 152 schließt sich ein weiterer Öffnungsabschnitt 153 der Öffnung 15 an, der einen zum Gewindeabschnitt 151 ähnlichen Innendurchmesser oder gleichen Innendurchmesser aufweisen kann, jedoch im Gegensatz zum Gewindeabschnitt 151 vorzugsweise kein Gewinde umfasst. Demzufolge ist der Nasenabschnitt 152 mit geringerem Innendurchmesser entlang der Durchlassrichtung in der Öffnung 15 zwischen dem Gewindeabschnitt 151 an der Stirnfläche S1 und dem Öffnungsabschnitt 153 an der Stirnseite S2 angeordnet. Gemäß einiger bevorzugter Ausführungsformen wird der Nasenabschnitt 152 durch einen ringförmig nach innen abstehenden und sich konisch verjüngenden Vorsprung in der Öffnung 15 gebildet. Entsprechend bildet der Nasenabschnitt 152 in der Öffnung 15 eine Haltenase.

Das Spreizelement 16 kann gemäß bevorzugter Ausführungsformen abschnittsweise als Madenschraube ausgebildet sein, die einen Gewindeabschnitt 161 und einen sich an den Gewindeabschnitt 161 anschließenden konisch verjüngenden Abschnitt 163 aufweist, der sich mit zunehmender Eindringtiefe des Spreizelements 16 in die Öffnung 15 zunehmend an den Nasenabschnitt 152 anlegt. Es ist ersichtlich, dass mit zunehmender Eindringtiefe des Spreizelements 16 in die Öffnung 15 durch den sich konisch verjüngenden Abschnitt 163 des Spreizelements 16 in Wechselwirkung mit dem Nasenabschnitt 152 in der Öffnung 15 eine zunehmende Aufspreizung des zylindrischen Gewindekörpers 11 erfolgt, so dass die Gewindescheibe 10 abhängig von der Eindringtiefe des Spreizelements 16 in die Öffnung 15 genau einstellbar gespreizt werden kann und, falls gewünscht, die Spreizung durch Reduzierung der Eindringtiefe auch wieder rückgängig gemacht oder gelöst werden kann.

Anhand eines sich an den konisch verjüngenden Abschnitt 163 des Spreizelements 16 entlang der Durchlassrichtung anschließenden konisch zunehmenden Bereichs 164, wobei die Abschnitte 163 und 164 insgesamt ein konkaves Profil im Querschnitt des Spreizelements 16 unterhalb des Gewindeabschnitts 161 bilden, kann vorteilhafterweise eine Verliersicherung für das Spreizelement 16 bereitgestellt werden. Der konkave Abschnitt des Spreizelements 16 unterhalb des Gewindeabschnitts 161 kann dabei derart ausgebildet sein, dass sich der Nasenabschnitt 152 der Öffnung 15 trotz aus der Öffnung 15 freiliegendem Gewindeabschnitt 161, insbesondere aus dem Gewindeabschnitt 151 der Öffnung 15 heraus, zunehmend an den konisch zulaufenden Abschnitt 164 des Spreizelements 16 anlegt und ein Herausfallen bzw. Verlieren des gelösten Spreizelements 16 in der Öffnung 15 zuverlässig verhindert bzw. blockiert wird.

Gemäß einiger beispielhafter Ausführungsformen weist das Spreizelement 16 an seinem dem Gewindeabschnitt 161 gegenüberliegenden Ende eine konische Einkerbung 165 auf, wodurch ein Einführen des Spreizelements in die Öffnung 15 bei einem erstmaligen Gebrauch vereinfacht bzw. ein Vorbeiführen des konisch zunehmenden Abschnitts 164 am Nasenabschnitt 152 der Öffnung 15 vereinfacht wird.

Es wird angemerkt, dass die spezielle Ausgestaltung der Öffnung 15, wie sie anhand Fig. 3e beschrieben ist, nicht als die vorliegende Erfindung beschränkend anzusehen ist, da gegebenenfalls schon durch Einschrauben eines als Madenschraube ausgebildeten Spreizelements in die Öffnung 15 eine genügende Aufspreizung der Gewindescheibe 10 vorgesehen werden kann, sofern ein geeignetes Größenverhältnis zwischen Spreizelement 16 und Öffnung 15 ausgewählt ist.

Durch die mittels des Spreizelements in der Öffnung durch eine Erweiterung der Nut 12 erreichte Aufspreizung der Gewindescheibe 10, wie sie anhand der Fig. 3a bis 3e beschrieben ist, wird eine Spannungserzeugung in der Gewindescheibe 10 minimiert, und insbesondere werden Spannungsbelastungen an Stegen in der Gewindescheibe zwischen Durchlassöffnungen unterdrückt.

Mit Bezug auf Fig. 4 wird nachfolgend eine Einbausituation der Gewindescheibe in einem Ventil gemäß einiger beispielhafter Ausführungsformen der Erfindung beschrieben.

Fig. 4 zeigt schematisch in einer Querschnittansicht ein Ventil 100, beispielsweise ein Halteventil oder ein Schockventil, mit einer Hülse 110, die in eine Grundplatte 120 eingeschraubt ist. Die Hülse 110 kann beispielsweise als Hohlschraube ausgeführt sein, in die die Gewindescheibe 10 als Widerlagerscheibe für ein Spannelement 130, z.B. ausgeführt als Feder, eingeschraubt ist. Die Hülse 110 stellt damit z.B. für das Ventil 100 einen Federdom dar. Eine Lagefixierung der Gewindescheibe 10 in der Hülse 110 erfolgt mittels Spreizung der Gewindescheibe 10 durch das Spreizelement 16, wie hinsichtlich Fig. 3e oben beschrieben ist. Durch die Spreizung der Gewindescheibe 10 wird das Außengewinde der Gewindescheibe 10 in das Innengewinde der Hülse 110 gedrückt, ohne dass die Gewindegänge des Außengewindes der Gewindescheibe 10 von Gewindegängen des Innengewindes der Hülse 110 abgehoben werden. Dadurch wird eine zuverlässige Lagefixierung der Gewindescheibe 10 in der Hülse 110 eingestellt, die durch ein Lösen des Spreizelements 16 in der Öffnung 15 gelöst werden kann. Damit lässt sich z.B. eine Vorspannung des Spannelements 130 im Ventil 100 auf einfache Weise einstellen und/oder ändern.

Ein Einstellen eines gewünschten Maximaldrucks im Ventil 100 kann gemäß einiger beispielhafter Ausführungsformen dadurch erfolgen, dass die Gewindescheibe 10 in die Hülse 100 eingeschraubt wird, beispielsweise durch Eingreifen mittels eines Innensechskantschraubenwerkzeugs in das Innensechskantprofil der zentralen Durchlassöffnung, und Anordnen der Gewindescheibe 10 an einer gewünschten Eindringtiefe in der Hülse 110 zur Bereitstellung einer gewünschten Vorspannung des Vorspannelements 130 im Ventil 100. Eine Fixierung der Gewindescheibe 10 an der gewünschten Eindringtiefe erfolgt mittels des Spreizelements 16, das mit einem vorbestimmten Anziehmoment beaufschlagt wird, beispielsweise einem Anziehmoment aus einem Bereich von 0,3 Nm bis 0,5 Nm, wodurch eine genau definierte Spreizung der Gewindescheibe 10 eingestellt wird.

Ein Verändern des Maximaldrucks in dem Ventil 100 auf einen gewünschten geänderten Maximaldruck mit einer in der Hülse 110 bereitgestellten Gewindescheibe, deren Lage an einer ersten Eindringtiefe zur Einstellung eines ersten Maximaldrucks fixiert ist, kann gemäß beispielhafter Ausführungsformen dadurch erfolgen, dass das angezogene Spreizelement 16 der Gewindescheibe 10 gelöst wird und die Eindringtiefe, gegebenenfalls mittels eines geeigneten Werkzeugs, zur Einstellung eines gewünschten zweiten Maximaldrucks bei einer gewünschten zweiten Eindringtiefe geändert wird, und anschließend die Lage der Gewindescheibe 10 an der gewünschten zweiten Eindringtiefe durch Anziehen des Spreizelements 16 fixiert wird. Es wird angemerkt, dass eine Spreizung der Gewindescheibe 10 durch Lösen des Spreizelements 16 aufgehoben wird.

Zusammenfassend wird in einem Aspekt eine Gewindescheibe bereitgestellt, die als Widerlagescheibe für ein Vorspannelement, vorzugsweise eine Feder, in einem Ventil, vorzugsweise ein Lasthalteventil oder Schockventil, eingesetzt werden kann. Die Gewindescheibe weist ein Außengewinde, das in der Mantelfläche der Gewindescheibe gebildet ist und eine Mehrzahl von Gewindegängen umfasst, wenigstens eine Durchlassöffnung, die die Gewindescheibe entlang einer Durchlassrichtung durchsetzt, und eine Verstellsicherung mit einem Spreizelement zum Spreizen der Gewindescheibe auf. Die Verstellsicherung umfasst ferner eine in der Mantelfläche entlang der Durchlassrichtung verlaufende Nut, die quer zum Außengewinde orientiert ist und mit einer Öffnung in Kontakt steht, die die Gewindescheibe entlang der Durchlassrichtung wenigstens teilweise durchsetzt, wobei das Spreizelement in der Öffnung angeordnet ist und abhängig von seiner Eindringtiefe in der Öffnung eine bestimmte Spreizung der Gewindescheibe senkrecht zur Durchlassrichtung erzeugt. In weiteren Aspekten werden ein Ventil mit einer entsprechenden Gewindescheibe als Wiederlagerscheibe für ein Vorspannelement und ein Verfahren zum Einstellen und/oder Ändern eines Maximaldrucks in einem entsprechenden Ventil bereitgestellt.

## Patentansprüche

1. Gewindescheibe (10) als Widerlagerscheibe für ein Vorspannelement, vorzugsweise eine Feder, in einem Ventil, vorzugsweise ein Lasthalteventil oder Schockventil, wobei die Gewindescheibe (10) ein Außengewinde (G), das in der Mantelfläche (M) der Gewindescheibe (10) gebildet ist und eine Mehrzahl von Gewindegängen aufweist, wobei die Gewindescheibe (10) eine zentrale Durchlassöffnung (17), die die Gewindescheibe (10) entlang einer Durchlassrichtung zentral durchsetzt und koaxial zu einer Symmetrieachse der Gewindescheibe (11) senkrecht zu einer Stirnfläche (S1) der Gewindescheibe (11) ausgebildet ist, wenigstens eine weitere Durchlassöffnung (14), die die Gewindescheibe (11) entlang der Durchlassrichtung vollständig durchsetzt, und zusätzlich zu der wenigstens einen Durchlassöffnung (14) und der zentralen Durchlassöffnung (17) eine weitere Öffnung (15) aufweist und wobei die Gewindescheibe(10) eine Verstellsicherung mit einem Spreizelement (16) zum Spreizen der Gewindescheibe (10) umfasst, **dadurch gekennzeichnet, dass** die Verstellsicherung ferner eine in der Mantelfläche (M) entlang der Durchlassrichtung ausgebildeten Nut (12) umfasst, die quer zum Außengewinde (G) orientiert ist und mit der Öffnung (15) in Kontakt steht, die die Gewindescheibe (10) entlang der Durchlassrichtung vollständig durchsetzt, wobei das Spreizelement (16) in der Öffnung (15) angeordnet ist und abhängig von seiner Eindringtiefe in der Öffnung (15) eine bestimmte Spreizung der Gewindescheibe (10) senkrecht zur Durchlassrichtung erzeugt.

2. Gewindescheibe (10) nach Anspruch 1, wobei die Nut (12) die Mehrzahl von Gewindegängen quer durchsetzt.

3. Gewindescheibe (10) nach Anspruch 1 oder 2, wobei in der Öffnung (15) ferner wenigstens eine Haltenase (152) gebildet ist, die sich mit zunehmender Eindringtiefe des Spreizelements (16) in die Öffnung (15) zunehmend an einen sich verjüngenden Abschnitt (163) des Spreizelements (16) anlegt.

4. Gewindescheibe (10) nach einem der Ansprüche 1 bis 3, wobei die Öffnung (15) einen Gewindeabschnitt (151) aufweist, in den das Spreizelement (16) eingeschraubt ist.

5. Gewindescheibe (10) nach einem der Ansprüche 1 bis 4, wobei das Spreizelement (16) abschnittsweise als Madenschraube ausgebildet ist.

6. Gewindescheibe (10) nach einem der Ansprüche 1 bis 5, wobei die Nut (12) die Öffnung (15) entlang einer Radialrichtung der Gewindescheibe (10) senkrecht zur Durchlassrichtung durchsetzt.

7. Gewindescheibe (10) nach einem der Ansprüche 1 bis 6, wobei ein Verhältnis von einer Tiefe der Nut (12) zu einem Durchmesser der Gewindescheibe (10) senkrecht zur Durchlassrichtung zwischen 0,5 und 1,0, vorzugsweise zwischen 0,6 und 1,0, und weiter bevorzugt zwischen 0,7 und 1,0 liegt.

8. Gewindescheibe (10) nach einem der Ansprüche 1 bis 7, wobei die zentrale Durchlassöffnung (17) eine sich von einer Stirnfläche (S2) der Gewindescheibe (10) entlang der Durchlassrichtung abstehende manschettenartige Auskragung (18) aufweist.

9. Ventil (100) mit einer Hülse (110) und einem Vorspannelement (130), das sich gegen eine in der Hülse (110) angeordnete Widerlagerscheibe (10) abstützt, wobei die Hülse (110) ein Innengewinde aufweist und die Widerlagerscheibe (10) durch die Gewindescheibe (10) nach einem der Ansprüche 1 bis 8 bereitgestellt wird, die in die Hülse (110) eingeschraubt ist.

10. Ventil (100) nach Anspruch 9, wobei die Widerlagerscheibe (10) in der Hülse (110) lösbar lagefixiert ist.

11. Ventil (100) nach Anspruch 9 oder 10, wobei das Ventil (100) als Einschraubventil mit einem Sechskant-Federgehäuse zur Montage an einer Grundplatte (120) ausgebildet ist.

12. Verfahren zum Einstellen und/oder Verändern eines gewünschten Maximaldrucks in dem Ventil (100) nach einem der Ansprüche 9 bis 11, wobei das Spreizelement (16) als Madenschraube in der Öffnung (15) vorgesehen ist, das Verfahren umfassend ein:
Bereitstellen der Gewindescheibe (10) als Widerlagerscheibe in der Hülse (110) an einer vorbestimmten Eindringtiefe;
Einstellen und/oder Ändern der Eindringtiefe der Gewindescheibe (10), um für das Vorspannelement (130) eine vorbestimmte Vorspannung einzustellen und/oder zu ändern; und
Fixieren der Gewindescheibe (10) an der geänderten Eindringtiefe durch Spreizung der Gewindescheibe (10) mittels eines vorbestimmten Anziehmoments zum Anziehen der Madenschraube in der Öffnung (15).

13. Verfahren nach Anspruch 12, wobei das Verfahren vor dem Einstellen und/oder Ändern der Eindringtiefe der Gewindescheibe (10) ferner umfasst ein:
Fixieren der Lage der Gewindescheibe (10) an der vorbestimmten Eindringtiefe durch Spreizung der Gewindescheibe (10) mittels des vorbestimmten Anziehmoments zum Anziehen der Madenschraube in der Öffnung (15); und
Lösen der Madenschraube in der Öffnung (15), um die Spreizung der Gewindescheibe (10) aufzuheben.

14. Verfahren nach Anspruch 12 oder 13, wobei das Anziehmoment in einem Bereich von 0,3 Nm bis 0,5 Nm liegt.

## Claims

1. Threaded disc (10) as an abutment disc for a biasing element, preferably a spring, in a valve, preferably a load-holding valve or shock valve, wherein the threaded disc (10) has an external thread (G) which is formed in the circumferential surface (M) of the threaded disc (10) and a plurality of threads, wherein the threaded disc (10) has a central passage opening (17), which passes centrally through the threaded disc (10) along a passage direction and is coaxial with an axis of symmetry of the threaded disc (11) perpendicular to an end face (S1) of the threaded disc (11), at least one further passage opening (14) which passes completely through the threaded disc (11) along the passage direction, and a further opening (15) in addition to the at least one passage opening (14) and the central passage opening (17), and wherein the threaded disc (10) comprises an adjustment lock with an expanding element (16) for expanding the threaded disc (10),
**characterised in that**
the adjustment lock further comprises a groove (12) formed in the circumferential surface (M) along the passage direction, which is oriented transversely to the external thread (G) and is in contact with the opening (15) which completely passes through the threaded disc (10) along the passage direction, wherein the expanding element (16) is arranged in the opening (15) and generates a specific expansion of the threaded disc (10) perpendicular to the passage direction as a function of its penetration depth in the opening (15).

2. Threaded disc (10) according to claim 1, wherein the groove (12) passes transversely through the plurality of threads.

3. Threaded disc (10) according to claim 1 or 2, wherein at least one retaining lug (152) is further formed in the opening (15), which retaining lug (152) increasingly abuts against a tapering portion (163) of the expanding element (16) as the depth of penetration of the expanding element (16) into the opening (15) increases.

4. Threaded disc (10) according to any one of claims 1 to 3, wherein the opening (15) has a threaded portion (151) into which the expanding element (16) is screwed.

5. Threaded disc (10) according to any one of claims 1 to 4, wherein the expanding element (16) is formed in sections as a grub screw.

6. Threaded disc (10) according to any one of claims 1 to 5, wherein the groove (12) passes through the opening (15) along a radial direction of the threaded disc (10) perpendicular to the passage direction.

7. Threaded disc (10) according to any one of claims 1 to 6, wherein a ratio of a depth of the groove (12) to a diameter of the threaded disc (10) perpendicular to the passage direction is between 0.5 and 1.0, preferably between 0.6 and 1.0, and more preferably between 0.7 and 1.0.

8. Threaded disc (10) according to any one of claims 1 to 7, wherein the central passage opening (17) has a sleeve-like projection (18) projecting from an end face (S2) of the threaded disc (10) along the passage direction.

9. A valve (100) comprising a sleeve (110) and a biasing member (130) supported against an abutment disc (10) disposed in the sleeve (110), wherein the sleeve (110) has an internal thread and the abutment disc (10) is provided by the threaded disc (10) according to any one of claims 1 to 8 screwed into the sleeve (110).

10. Valve (100) according to claim 9, wherein the abutment disc (10) is releasably fixed in position in the sleeve (110).

11. Valve (100) according to claim 9 or 10, wherein the valve (100) is designed as a screw-in valve with a hexagonal spring housing for mounting on a base plate (120).

12. A method for setting and/or changing a desired maximum pressure in the valve (100) according to any one of claims 9 to 11, wherein the expanding element (16) is provided as a grub screw in the opening (15), the method comprising:
providing the threaded disc (10) as an abutment disc in the sleeve (110) at a predetermined penetration depth;
setting and/or changing the penetration depth of the threaded disc (10) to set and/or change a predetermined bias for the biasing member (130); and
fixing the threaded disc (10) to the changed penetration depth by expanding the threaded disc (10) by means of a predetermined tightening torque for tightening the grub screw in the opening (15).

13. Method according to claim 12, wherein the method, prior to setting and/or changing the penetration depth of the threaded disc (10), further comprises:
fixing the position of the threaded disc (10) at the predetermined penetration depth by expanding the threaded disc (10) by means of the predetermined tightening torque for tightening the grub screw in the opening (15); and
loosening the grub screw in the opening (15) to remove the expanding of the threaded disc (10).

14. Method according to claim 12 or 13, wherein the tightening torque is in a range from 0.3 Nm to 0.5 Nm.

## Revendications

1. Disque fileté (10) en qualité de disque de butée pour un élément de sollicitation, de préférence un ressort, dans une valve, de préférence une valve d'équilibrage ou une valve antichoc, ledit disque fileté (10) comprenant un filetage mâle (G) formé dans la surface latérale (M) dudit disque fileté (10) et une pluralité de filets, ledit disque fileté (10) comprenant un trou traversant central (17) qui traverse le centre dudit disque fileté (10) le long d'une direction de passage et qui est prévu coaxial relatif à l'axe de symétrie du disque fileté (11) perpendiculaire à la surface frontale (S1) du disque fileté (11), au moins un autre trou traversant (14) qui de part en part passe à travers le disque fileté (11) le long d'une direction de passage, et outre ledit au moins un trou traversant (14) et ledit trou traversant central (17) une autre ouverture (15), et ledit disque fileté (10) comprend un dispositif anti-rotation comportant un élément à expansion (16) pour effectuer une expansion dudit disque fileté (10),
**caractérisé en ce que** ledit dispositif anti-rotation en outre comprend une rainure (12) formée dans la surface latérale (M) le long de la direction de passage, ladite rainure étant orientée transversale audit filetage mâle (G) et étant en contact avec l'ouverture (15) qui passe de part en part à travers le disque fileté (11) le long de la direction de passage,
ledit élément à expansion (16) étant disposé dans l'ouverture (15) et, en fonction de sa profondeur de pénétration dans l'ouverture (15), produit une expansion déterminée dudit disque fileté (10) perpendiculaire à la direction de passage.

2. Disque fileté (10) selon la revendication 1, dans lequel ladite rainure (12) traverse transversalement ladite pluralité de filets.

3. Disque fileté (10) selon la revendication 1 ou 2, dans lequel en outre au moins un nez de retenue (152) est formé dans l'ouverture, et plus que la profondeur de pénétration dans l'ouverture (15) dudit élément à expansion (16) est grande, plus ledit nez de retenue (152) vient en appui contre la partie conique (163) dudit élément à expansion (16).

4. Disque fileté (10) selon l'une quelconque des revendications 1 à 3, dans lequel l'ouverture (15) comprend une partie filetée (151) dans laquelle est visée ledit élément à expansion (16).

5. Disque fileté (10) selon l'une quelconque des revendications 1 à 4, dans lequel ledit élément à expansion (16) est en partie en forme de vis sans tête.

6. Disque fileté (10) selon l'une quelconque des revendications 1 à 5, dans lequel ladite rainure (12) traverse ladite ouverture (15) le long d'une direction radiale dudit disque fileté (10) perpendiculaire la direction de passage.

7. Disque fileté (10) selon l'une quelconque des revendications 1 à 6, dans lequel la proportion de la profondeur de ladite rainure (12) au diamètre dudit disque fileté (10) perpendiculaire à la direction de passage est comprise entre 0,5 et 1,0, de préférence entre 0,6 et 1,0, et plus préféré entre 0,7 et 1,0.

8. Disque fileté (10) selon l'une quelconque des revendications 1 à 7, dans lequel ledit trou traversant central (17) comprend un élément de manchon (18) en saillie de la surface frontale (S2) du disque fileté (10) le long de la direction de passage

9. Valve (100) comprenant une douille (110) et un élément de sollicitation (130) en appui contre un disque de butée (10) disposé dans ladite douille (110), ladite douille (110) comprenant un filetage femelle et ledit disque de butée (10) étant prévu par ledit disque fileté (10) selon l'une quelconque des revendications 1 à 8 qui est vissé dans ladite douille (110).

10. Valve (100) selon la revendication 9, dans laquelle ledit disque de butée (10) est fixé en position dans ladite douille (110) de façon amovible.

11. Valve (100) selon la revendication 9 ou 10, dans laquelle ladite valve (100) est en forme de valve vissée à boîtier de ressort hexagonal pour montage sur une plaque de base (120).

12. Procédé pour ajuster et/ou modifier la pression maximale désirée dans la valve (100) selon l'une quelconque des revendications 9 à 11, dans lequel ledit élément à expansion (16) est prévu en forme de vis sans tête dans ladite ouverture (15), ledit procédé comprenant :
prévoir ledit disque fileté (10) en qualité de disque de butée dans ladite douille (110) à une profondeur de pénétration déterminée ;
ajuster et/ou modifier la profondeur de pénétration dudit disque fileté (10) afin d'ajuster et/ou modifier une précontrainte déterminée pour ledit élément de sollicitation (130) ; et
fixer ledit disque fileté (10) à la profondeur de pénétration modifiée en effectuant une expansion dudit disque fileté (10) moyennant un couple de serrage déterminé pour serrer ladite vis sans tête dans ladite ouverture (15).

13. Procédé selon la revendication 12, dans lequel le procédé, avant d'ajuster et/ou modifier la profondeur de pénétration dudit disque fileté (10), en outre comprend :
fixer la position dudit disque fileté (10) à la profondeur de pénétration déterminée en effectuant une expansion dudit disque fileté (10) moyennant le couple de serrage déterminé pour serrer ladite vis sans tête dans ladite ouverture (15) ; et
desserrer ladite vis sans tête dans ladite ouverture (15) afin de supprimer l'expansion dudit disque fileté (10).

14. Procédé selon la revendication 12 ou 13, dans lequel le couple de serrage est compris entre 0,3 Nm et 0,5 Nm.
